# EUROPEAN PATENT SPECIFICATION

(11) **EP 3 665 072 B1**
(45) Date of publication and mention of the grant of the patent: **13.10.2021**
(21) Application number: 18770074.5
(22) Date of filing: 31.07.2018
(51) Int. Cl.: B62D 49/08, B60R 9/06, B60R 11/06, A01B 76/00, B60B 15/28

(54) **COUNTERWEIGHT, PREFERABLY FOR A FARM TRACTOR**
GEGENGEWICHT, VORZUGSWEISE FÜR EINEN ACKERSCHLEPPER
CONTREPOIDS, DE PRÉFÉRENCE POUR TRACTEUR AGRICOLE

(30) Priority: 09.08.2017 PL 42250617
(43) Date of publication of application: 17.06.2020
(73) Proprietor: Kosinski, Robert, 21-230 Sosnowica (PL)
(72) Inventor: Kosinski, Robert, 21-230 Sosnowica (PL)
(74) Representative: Malcherek, Piotr
(86) International application number: PCT/IB2018/055708
(87) International publication number: WO 2019/030613

(56) References cited:
- EP-A1- 2 380 804
- DE-A1- 10 036 076
- US-A1- 2010 236 955
- US-A1- 2012 267 404
- US-A1- 2015 060 508

## Description

The subject of the invention is a counterweight, preferably for farm tractors.

The catalogue titled "MULTIMASS Concept weights" by the company Mailleux, also known as MX, discloses counterweights and a box for connection with such counterweights. The counterweights are equipped with a 3-point hook and an automatic hook. Each type of MULTIMASS counterweights has a different mass.

Patent description DE10036076 (A1) discloses a box consisting of at least one plate protruding from the back wall of the box, where such a plate is equipped with at least one transverse hole for a fastening bolt. Moreover, the box is facilitated with at least one load-bearing element with adjustable length that protrudes from the back wall of the box. The plate itself has been designed as an empty rectangular or square section directed towards the back of the back wall of the box and has been equipped with alignment holes in its top and bottom part. Independently, the document describes a counterweight for a vehicle equipped with a dragged machine and a box connected to it, as well as an agricultural tractor with the connected box.

Patent application EP2380804 (A1) provides information on a counterweight that is equipped with two side parts located on both sides of the central part in a form of a storage compartment. Each of the side parts consists of a side mass made of concrete or cast iron. Side masses are symmetrical and reversible, so that they can be attached on the right or the left side of the central part. Side masses can also have external walls inclined against the back part of the counterweight, which will be used to guide objects to the outer outline of the vehicle.

Patent application US2015060508 (A1) discloses a counterweight according to the preamble of claim 1. This document provides information on an assembly system for a horizontally orientated weight support for utility vehicles. The assembly system consists of a coupling device, a plate, and a pair of supports. The coupling device is attached to and shifted from the plate. Each support has its front end connected to the coupling device and its back end connected with the weight bracket. Each support is connected with the coupling device in a movable way so that the distance between the supports can be adjusted. The assembly system can be a container, in which the plate forms the wall of the container, or the assembly system can be a shelf or an element supported by the supports.

The aim of the invention is to allow closing and opening of the transportation box by the vehicle operator. The additional aim of the invention is to adjust the load on the counterweight in order to make it universal for various tractors and their various loads resulting from working machinery. The invention concerns a counterweight, preferably for an farm tractor, which comprises a body with a hook fixed to its top and bolts fixed to the body's side surfaces. A box is fixed to the front of the body. The box comprises a bottom plate, joined with a back wall, a front wall, side walls. The essence of the invention is that an actuator is fixed to the central part of the bottom plate by its first end, employing the actuator first hinge and the second end of the actuator is fixed, employing the actuator second hinge, to a cover. On the inner side of the back wall, on each side of the actuator, there is fixed a bushing, in which there is a piston seated, the top end of which is connected by a hinge of the piston to the cover.

Additionally, it is recommended that the body is open in the bottom and there are holes, at least in one of its walls, for pins connecting a suspended weight plate with the body.

It is preferred that there are steps on the top surface of the back wall, of the front wall and of the side walls, and there are steps located on the bottom surface of the cover, at its edges. The steps of the walls and the steps of the cover, mutually interlock each other.

It is also preferred that there are partition walls placed in the space between the bottom plate, the back wall, the front wall, and the side walls.

According to the invention, the advantageous benefit of the counterweight, preferably for farm tractors, is the possibility to use it as a cargo box for transportation of equipment or additional weight, e.g. in form of weight-plates. What is more, the invention allows adjustment of the weight of the counterweight through suspension of weight plates of various weight, which makes the invention capable of balancing the weight of various machines. Additionally, the closing of the box by the actuator fixed to the cover prevents opening it when the engine of the tractor is off. The steps on the cover and the steps on the side walls will secure the cargo against weather conditions such as rain or snow. The box compartments formed by the partition walls allow transport of various types of goods.

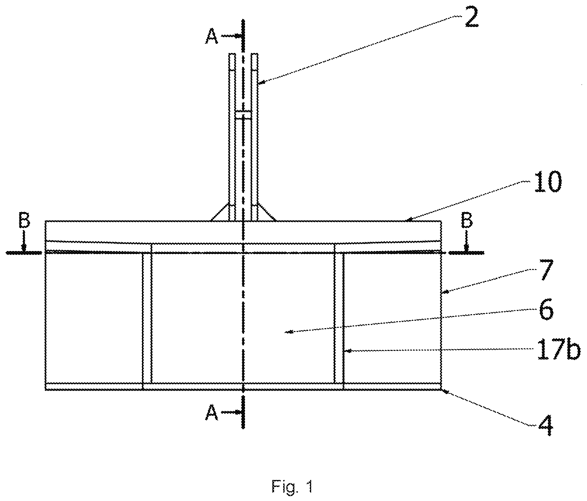

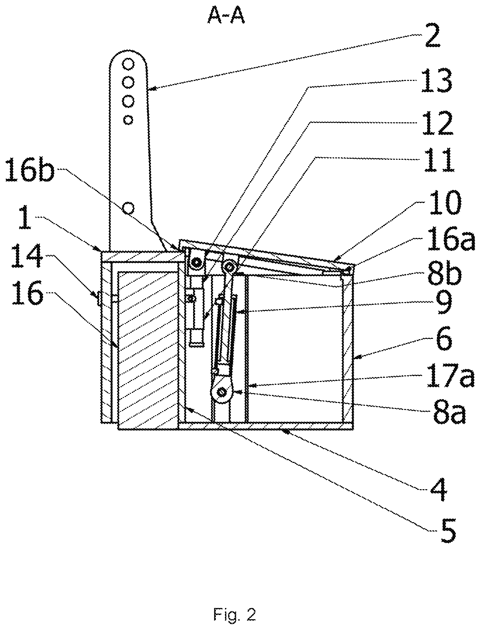

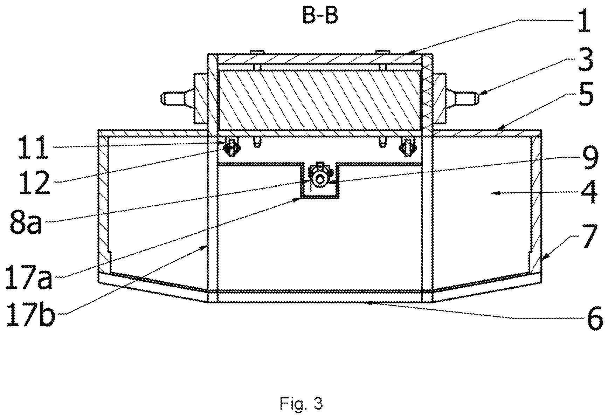

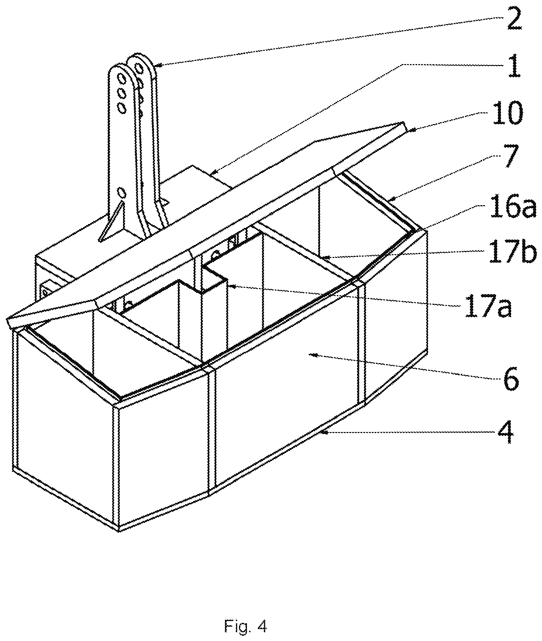

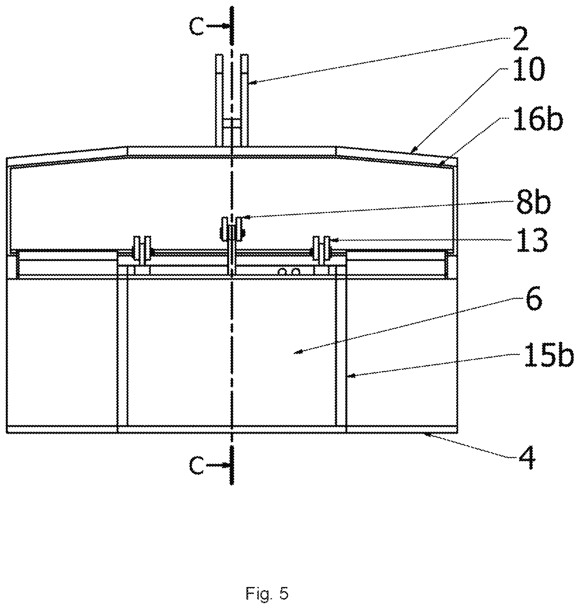

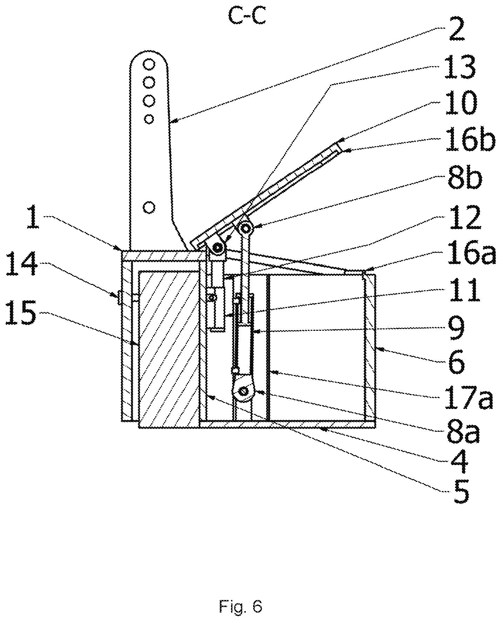

The invention has been presented in the embodiment in the drawings, where fig. 1 presents counterweights with a closed cover, in the front view, fig. 2 - a counterweight with a closed cover, in the cross-section along line A-A, fig. 3 - a counterweight with a closed cover, in the cross-section along line B-B, fig. 4 - a counterweight with an open cover, in the perspective view, fig. 5 - a counterweight with an open cover, in the front view, fig. 6 - a counterweight with an open cover, with the cross-section along line C-C.

The invention in form of a counterweight in the concerned embodiment comprises a body 1 that has a hook 2 fixed to its top, while bolts 3 are fixed to the body's 1 side surfaces. Both hook 2 and bolts 3 are intended for suspending the counterweight to a farm tractor. A welded box is fixed to the front of the body 1.The box comprises a bottom plate 4, joined with a back wall 5, having three parts, a front wall 6, having three parts, and a side walls 7. The back wall 5 of the welded box closes the body 1 form the front, so that body 1 has no bottom. An actuator 9 is fixed to the central part of the bottom plate 4 by its first end, employing an actuator first hinge 8a and the second end of the actuator 9 is fixed, employing an actuator second hinge 8b, to a bottom surface of a cover 10. On the inner side of the back wall 5, on each side of the actuator 9, there is a bushing 11 fixed. In each bushing 11 there is a piston 12 seated. A top end of the piston 12 is connected by a hinge 13 of the piston 12 to the cover 10. The Body 1 is open in the bottom, whereby in the back wall of the body 1 and in the back wall 5 of the welded box, which closes the body 1 from the front, there are two pairs of through holes. These through holes are intended for fastening the weight plate 15 in a form of properly selected counterweight by using pins 14, in a body 1 between the back wall of body 1 and back wall 5 of the welded box. Consequently, pins 14 go through those through holes as well as go through holes in the suspended weight plate 15. The suspended weight plate 15 can be easily replaced, depending on the required weight, by convenient release of pins 14, replacement of the suspended weight plate 15, and securement it once again with pins 14 There are steps 16a on the top surface of the back wall 5a, of the front wall 6 and of the side walls 7.There are steps 16b located on the bottom surface of the cover 10, near its edges. There are partition walls 17 in the space between the bottom plate 4, the back wall 2, the front wall 6 and side walls 7. The second partition walls 17b divide the box into three parts, while the first partition wall 17a separates the cargo space from the space with actuator 9 and bushings 11.

### List of indications

- 1.: body
- 2.: hook
- 3.: bolt
- 4.: bottom plate
- 5.: back wall
- 6.: front wall
- 7.: side wall
- 8.: actuator hinge
- 8a.: first actuator hinge
- 8b.: second actuator hinge
- 9.: actuator
- 10.: cover
- 11.: bushing
- 12.: piston
- 13.: piston hinge
- 14.: pin
- 15.: weight plate
- 16.: steps
- 16a.: steps at the top edge of walls
- 16b.: steps at the edges of the cover
- 17.: partition walls
- 17a.: first partition wall
- 17b.: second partition wall

## Claims

1. A counterweight, preferably for a farm tractor, which comprises a body (1) with a hook (2) fixed to its top and bolts (3) fixed to the body's (1) side surfaces, whereby a box is fixed to the front of the body (1), and the box comprises a bottom plate (4), joined with a back wall (5), a front wall (6), and side walls (7), **characterized in that** an actuator (9) is fixed to the central part of the bottom plate (4) by its first end, employing an actuator first hinge (8a) and the second end of the actuator (9) is fixed, employing an actuator second hinge (8b), to a cover (10), whereas on the inner side of the back wall (5), on each side of the actuator (9), there is a bushing (11) fixed, in which there is a piston (12) seated, the top end of which is connected by a hinge (13) of the piston (12) to the cover (10).

2. A counterweight according to claim 1 **characterized in that** the body (1) is open in the bottom and there are holes, at least in one of its walls, for pins (14) connecting a suspended weight plate (15) with the body (1).

3. A counterweight according to claim 1 or 2 **characterized in that** there are steps (16a) on the top surface of the back wall (5), of the front wall (6) and of the side walls (7), and there are steps (16b) located on the bottom surface of the cover (10), at its edges.

4. A counterweight according to any claim from 1 to 3 **characterized in that** there are partition walls (17) placed in the space between the bottom plate (4), the back wall (5), the front wall (6), and the side walls (7).

## Patentansprüche

1. Gegengewicht, insbesondere für einen Ackerschlepper, mit einem Körper (1), an dessen Oberteil eine Anhängevorrichtung (2) befestigt ist, und an den Seitenflächen Stifte (3) angebracht sind, wobei an den Körper (1) von der Vorderseite eine Kiste angehängt ist, die eine Bodenplatte (4) aufweist, an die eine Rückwand (5), eine Vorderwand (6) und Seitenwände (7) befestigt sind, **dadurch gekennzeichnet, dass** ein Zylinder (9) mit seinem ersten Ende im Mittelteil mittels eines ersten Zylinderscharniers (8a) an der Bodenplatte (4) befestigt ist, und sein zweites Ende mittels eines zweiten Zylinderscharnier (8b) an einem Deckel (10) befestigt ist, und von innen zur Rückwand (5) beiderseits des Zylinders (9) eine Hülse (11) angebracht ist, wobei in jeder Hülse (11) ein Kolben (12) gelagert ist, an dessen oberem Ende der Deckel (10) mittels einem Scharnier (13) des Kolbens (12) befestigt ist.

2. Gegengewicht nach Anspruch 1, **dadurch gekennzeichnet, dass** der Körper (1) nach unten offen ist und mindestens eine Wand davon Löcher für Stifte (14) aufweist, die eine abgehängte Ballastplatte (15) mit dem Körper (1) verbinden.

3. Gegengewicht nach Anspruch 1 bis 2, **dadurch gekennzeichnet, dass** sich auf der Oberseite der Rückwand (5), der Vorderwand (6) und den Seitenwänden (7) Stufen (16a), und an der Unterseite des Deckels (10) an seiner Kanten Stufen (16b ) befinden.

4. Gegengewicht nach Anspruch 1 bis 3, **dadurch gekennzeichnet, dass** die Trennwände (17) im Raum zwischen der Bodenplatte (4), der Rückwand (2), der Vorderwand (7) und den Seitenwänden (8) vorgesehen sind.

## Revendications

1. Le contrepoids, surtout pour le tracteur agricole ayant un corps (1), à la partie supérieure duquel, il est fixé un dispositif d'attelage (2) et sur les surfaces latérales, il est fixé des mandrins (3), étant entendu que sur le corps (1) il est fixé dans la partie avant, une caisse contenant une plaque inférieure (4), sur laquelle il est fixé: une paroie arrière (5), une paroi avant (6), et des parois latérales (7), est caractéristique en ce que, sur la plaque inférieure (4), dans la partie centrale, il est fixé, avec la première charnière (8a) du vérin, avec la première extrémité, le vérin (9), dont l'autre extrémité est fixée avec l'autre charnière (8b) du vérin, sur le couvercle (10), et à partir du côté intérieur jusqu'à la paroi arrière (5), de chaque côté du vérin (9), il est fixé une douille (11), mais dans chaque douille (11) il est installé un piston (12), jusqu'à l'extrémité supérieure duquel, il est fixé, avec la charnière (13) du piston (12), le couvercle (10).

2. Le contrepoids, selon la revendication 1, est caractéristique en ce que le corps (1) est ouvert par le bas, et sur une de ses parois au minimum. Il se trouve des trous pour des goupilles (14) assemblant une plaque de ballast (15) avec le corps (1).

3. Le contrepoids, selon les revendications d e 1 à 2, est caractéristique en ce que, sur la surface supérieure de la paroi arrière (5), de la paroi avant (6), des parois latérales (7), il y a des étages (16a) et, sur la surface inférieure du couvercle (10), à côté de ses bords, il y a des étages (16b).

4. Le contrepoids, selon les revendications de 1 à 3, est caractéristique en ce que dans l'espace entre la plaque inférieure (4), la paroi arrière (2), la paroi avant (7) et les parois latérales (8), il y a des cloisons (17).
